# EUROPÄISCHE PATENTSCHRIFT

(11) **EP 1 242 230 B1**
(45) Veröffentlichungstag und Bekanntmachung des Hinweises auf die Patenterteilung: **06.08.2003**
(21) Anmeldenummer: 00993699.8
(22) Anmeldetag: 09.12.2000
(51) Int. Cl.: B29C 67/00, B29C 39/00

(54) **VERFAHREN ZUM MODELLBAU**
METHOD OF MODEL CONSTRUCTION
PROCEDE DE MODELISME

(30) Priorität: 31.12.1999 DE 19963948
(43) Veröffentlichungstag der Anmeldung: 25.09.2002
(73) Patentinhaber: Herbak, Zsolt, 75323 Bad Wildbad-Calmbach (DE)
(72) Erfinder: Herbak, Zsolt, 75323 Bad Wildbad-Calmbach (DE)
(74) Vertreter: Frank, Gerhard, Dipl.-Phys.
(86) Internationale Anmeldenummer: DE0004387
(87) Internationale Veröffentlichungsnummer: WO01049477

(56) Entgegenhaltungen:
- EP-A- 0 273 608
- DE-A- 4 303 002
- DE-A- 19 729 982
- GB-A- 2 248 571

## Beschreibung

### Technisches Gebiet

Die Erfindung betrifft ein Verfahren zum Modellbau nach dem Oberbegriff des Anspruchs 1.

### Stand der Technik

Es ist eine Vielzahl solcher sogenannten Rapid Prototyping-Methoden bekannt, die alle darauf beruhen, ein Modell aus einem Kunststoff schichtweise aufzubauen (siehe z.B. Industrieanzeiger 47-48/97, S. 52-64).

Durch die immer kürzer werdenden Produktzyklen gewinnt die Methode des Rapid Prototyping zunehmend an Bedeutung. Der Schichtenbau erfolgt im allgemeinen vollautomatisch, wobei die Steuersigrale aus einem 3-D CAD-Datensatz gewonnen werden. Die bisherigen Verfahren sind relativ langsam und nur für kleine Modelle geeignet. Das Herstellen von Modellen mit Volumina in der Größenordrung ab 1 m³ ist praktisch ausgeschlossen. Dies hat zur Folge, daß großvolumige Modelle, beispielsweise 1:1 Modelle von Automobilen immer noch mit im wesentlichen handwerklichen Methoden mit entsprechend hohem Aufwand und Kosten gefertigt werden müssen.

### Zusammenfassung der Erfindung

Ausgehend von diesem Stand der Technik ist es Aufgabe der Erfindung, ein Modellbauverfahren zu schaffen, bei dem großvolumige Modelle zumindest im wesentlichen automatisch hergestellt werden können.

Diese Aufgabe wird durch ein Verfahren mit den Merkmalen des Anspruchs 1 gelöst.

Beim erfindungsgemäßen Verfahren wird das Modell schichtweise aus einem Kunststoff aufgebaut, welcher unmittelbar vor dem Auftragen oder nach dem Auftragen, beziehungsweise beim Auftragen aus einem Auftragskopf sein Volumen vergrößert, beispielsweise ein PU-Hartschaum.

### Kurzbeschreibung der Figuren

Die Erfindung wird nun anhand von Zeichnungen näher erläutert. Es zeigen:
- Fig. 1: eine Vorrichtung zur Durchführung des Verfahrens,
- Fign. 2a-d: eine erste Variante des Verfahrens,
- Fign. 3a-d: eine zweite Variante des Verfahrens,
- Fig. 4: einen Mischkopf zur Durchführung des Verfahrens in einer ersten Arbeitsstellung,
- Fig. 5: einen Mischkopf zur Durchführung des Verfahrens in einer zweiten Arbeitsstellung,
- Fig. 6: eine Detailansicht des Mischkopfes.

### Ausführliche Beschreibung bevorzugter Ausführungsformen

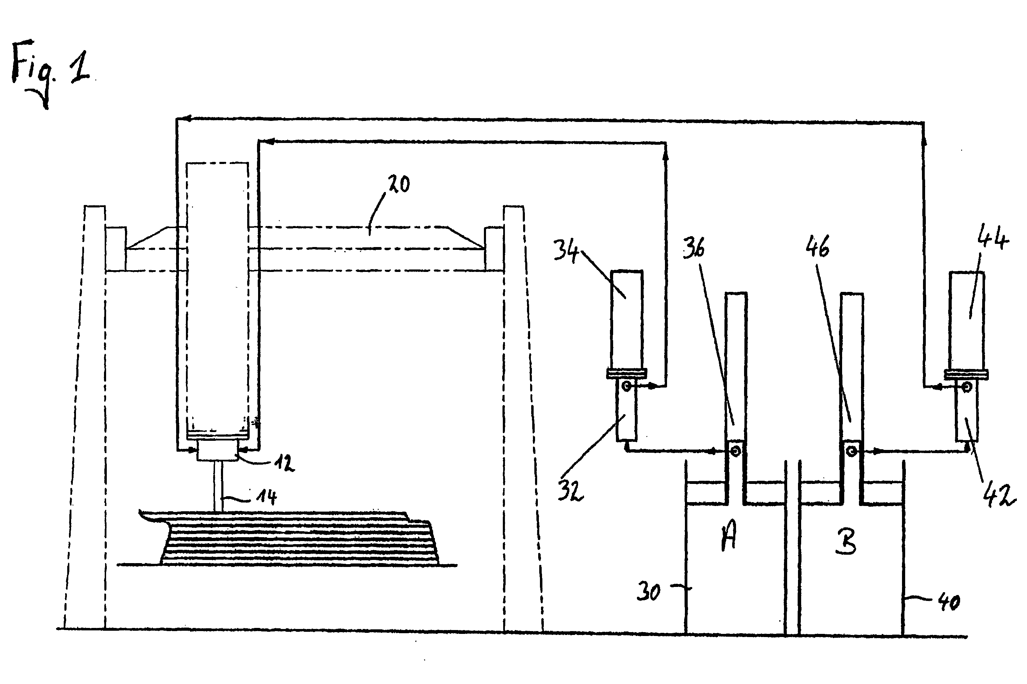

Fig. 1 zeigt eine Vorrichtung zur Durchführung des erfindungsgemäßen Verfahrens. Die Vorrichtung weist einen an einem Portalroboter 20 befestigten Auftragskopf auf. Der Auftragskopf 10 besteht aus einem Mischer 12 mit einer Düse 14. Eine geeignete Mischer/Düse-Einheit wird unten mit Bezug auf die Fign. 4 bis 6 beschrieben.

Zwei Komponenten A und B, welche sich jeweils in Tanks 30, 40 befinden, werden zunächst mit den beiden Niederdruckförderanlagen 36, 46 zu den beiden Hochdruckpumpen 32, 42 gefördert. Die durch die beiden Servomotoren 34, 44 über elektromechanische Lineareinheiten angetriebenen Hochdruckpumpen 32, 42, die hier nach dem doppelwirkenden Kolbenpumpen-Prinzip arbeiten, pumpen die Komponenten mit einem Systemdruck von 100-200 bar weiter zum Mischer 12. Die Höhe des Förderdrucks wird mit Druckaufnehmem erfaßt, und an den Zentralrechner weitergeleitet. Die Pulsation in den angeschlossenen Anschlußleitungen wird mittels Stickstoffblasen geglättet.

Im Mischer 12 werden die Komponenten durchmischt und treten durch die Düse 14 aus. Die Komponenten A und B führen eine chemische Reaktion aus, welche zu einer Volumenvergrößerung der Substanz führt. Der Auftragskopf wird in allen drei Raumrichtungen verfahren, so daß ein Modell schichtweise aufgebaut wird. Der Schaum, der durch die beiden Komponenten A und B gebildet wird, erreicht sein Endvolumen so schnell und entwikkelt eine so große Anfangsfestigkeit, daß bei jedem Durchgang des Auftragskopfs eine neue Schicht auf die zuvor erzeugte Schaumschicht aufgetragen werden kann. Die Schichtdicke einer jeden Schaumschicht beträgt hierbei etwa zwischen 1 und 5cm. Die Steuerung der gesamten Anlage wird von einem Zentralrechner übernommen, wobei die Steuersignale aus einem CAD-Datensatz erzeugt werden. Wichtig ist, daß die Bewegung des Mischkopfes auf seiner Raumkurve mit der Förderleistung der Hockdruckpumpen 32, 42 synchronisiert ist. Um die jeweiligen Fördermengen und somit auch das Mischungsverhältnis der beiden Hochdruckpumpen 32, 42 exakt regeln zu können, empfiehlt es sich, sie beim Pumpen mit Servomotoren 34, 44 anzutreiben. Durch die genaue Regelbarkeit des Mischungsverhältnisses können auch die Eigenschaften des Schaumes während des Herstellungsprozesses des Modells verändert werden.

Folgende Arbeitsparameter sind beispielsweise möglich:

Als Komponente A dient MDI (Isocyanat), als Komponente B ein Polyolgemisch mit Additiven. Beispielsweise kann folgende Rezeptur verwendet werden:

| **Produktname / Hersteller** | **Gewichtsanteile** |
|---|---|
| **Komponente A** | |
| Desmodur VL / Bayer | 134,50 |
| | |

| **Komponente B** | |
|---|---|
| Desmophen 250 U / Bayer | 9,00 |
| Desmophen 550 U / Bayer | 35,50 |
| EW-Pol 1100 / III. / Henkel | 10,00 |
| Rizinunöl / Graf | 20,00 |
| DAMP Fyrol 6 / Akzo | 5,00 |
| APPO Fyrol 51 / Akzo | 5,00 |
| Exolit TP622 / Hoechst | 12,00 |
| Martinal ON-920 / Martinswerke | 26,00 |
| Zusatzmittel DT / Bayer | 2,00 |
| Dabco /Goldschmidt | 6,00 |
| Fomrez UL 1 / Witco NRC. | 0,80 |
| Tegostab B 8408/ Goldschmidt | 1,20 |
| Topanol O /ICI | 2,00 |
| Hostaflamm RP 602/ Hoechst | 6,00 |
| | |
| Füllstoff: Titandioxid (optional) | 5-15 |
| Füllstoff: Zinkoxid (optional) | 5-15 |

Hier erfolgt die eigentliche chemische Reaktion im Mischer 12 mit einer Topfzeit von ca. 10 Sekunden.

In einer besonders vorteilhaften Ausführungsform weist die Anlage ein Meßsystem auf, welches die Form des bereits hergestellten Modellteils kontrolliert. Mittels einer Rückkopplung an den Zentralrechner können somit Sollwertabweichungen in den folgenden Durchgängen, beispielsweise durch Änderung des Mischungsverhältnisses der Komponenten A und B oder durch eine Änderung der Geschwindigkeit des Auftragskopfes ausgeglichen werden.

In den meisten Anwendungsfällen werden die Außenmaße eines Modells, welches ausschließlich mit der oben beschriebenen Methode hergestellt wurde, zu ungenau sein. Außerdem wird häufig eine glatte, harte und lakkierfähige Oberfläche benötigt, die mit der Aufschäummethode nicht herstellbar ist. Es werden deshalb zwei Methoden zur Endbearbeitung des Modells vorgeschlagen.

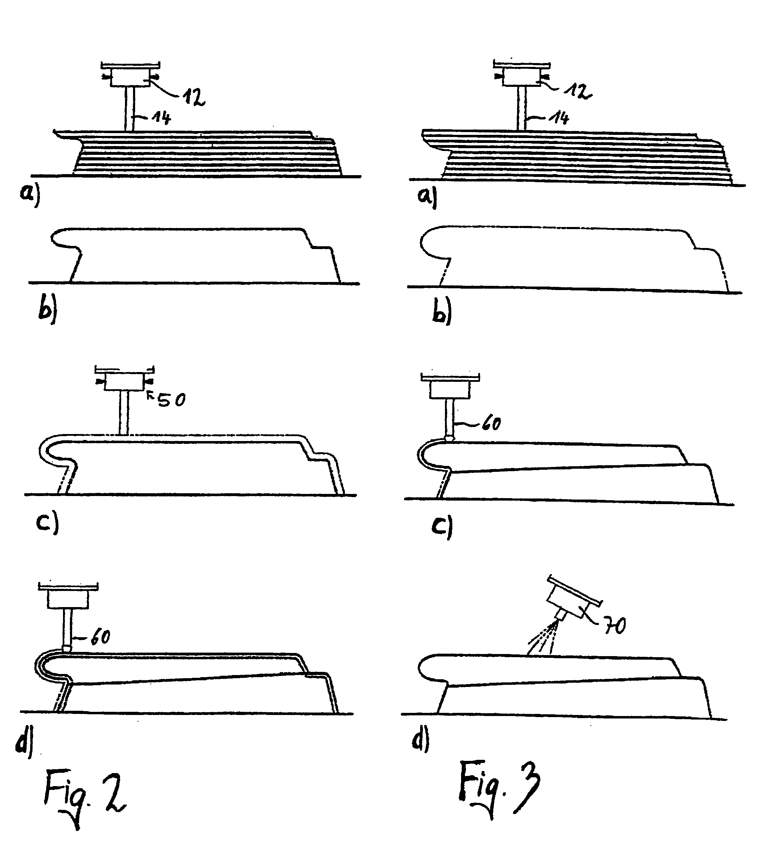

Bei der ersten Methode (s. Fig. 2) wird zunächst das Grundmodell auf Untermaß gefertigt (Fig. a), b)). In einem zweiten Schritt wird mittels eines zweiten Auftragskopfs 50 ein Kunststoff, im allgemeinen ein Zweikomponenten-Kunststoff auf das Grundmodell aufgetragen. In der Regel muß dieser zweite Auftragskopf 50 fünfachsig bewegbar sein. Da es schwierig sein dürfte, den Kunststoff so aufzutragen, daß sich ein exaktes Außenmaß ergibt, empfiehlt es sich, diesen Kunststoff mit Übermaß aufzutragen und nach Aushärten das Modell auf. Sollmaß zu überfräsen. Ein hierzu eingesetzter Fräskopf 60 kann ebenfalls CNC-gesteuert sein und muß im allgemeinen über 5 Achsen verfügen. Es ist denkbar, dass alle diese Arbeiten vom selben Portalroboter durchgeführt werden, wobei nur die Arbeitsköpfe ausgetauscht werden.

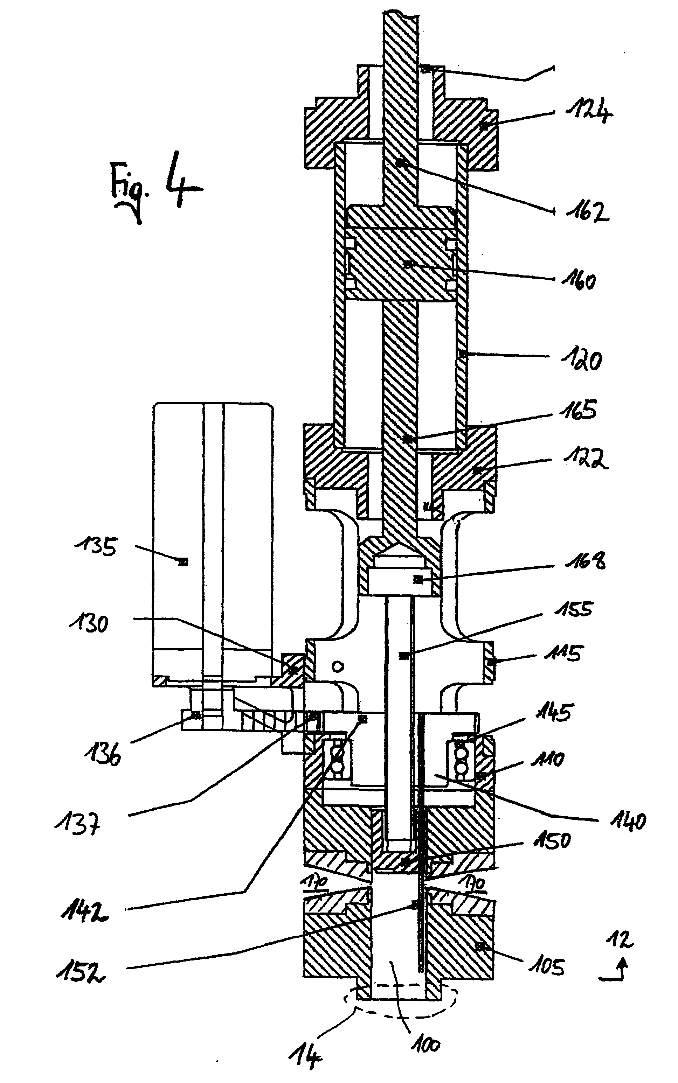

Bei einer zweiten Methode (s. Fig. 3) wird das Grundmodell zuerst mit Übermaß gefertigt. Anschließend wird dieses Grundmodell mittels eines Fräskopfes 60 auf Sollmaß gebracht. Um eine harte Oberfläche zu erhalten, wird nun noch mittels eines Sprühkopfes 70 ein Zweikomponenten-Kunststoff aufgetragen.

Es wird weiterhin vorgeschlagen, zwischen die Schichten des Models Zwischenlagen, beispielsweise aus Aluminiumblech oder Folie einzulegen. Solche Zwischenlagen können glatt, perforiert oder perforiert und in sich verschränkt sein - beispielsweise Streckmetall. Solche Bleche/Folien werden jeweils nach einem "Durchgang" des Auftragskopfes auf die jeweils oberste Schicht aufgelegt. Dies kann per Hand oder mittels eines Roboters geschehen. Solche Zwischenschichten haben den Vorteil, dass sie Zugkräfte aufnehmen und somit das Modell stabilisieren können. Ob und wie viele solcher Zwischenschichten nötig oder wünschenswert sind, hängt unter anderem von der Größe des Modells und von der Materialwahl ab.

Es wird nun noch ein geeigneter Auftragskopf beschrieben:

In Figur 4 ist ein geeigneter Mischkopf im Querschnitt dargestellt. Mischer 12 und Düse 14 bilden hier eine bauliche Einheit. Ein Mischkammergehäuse 105 weist eine zylindrische Mischkammer 100 auf, welche nach unten hin offen ist und somit die Düse 14 bildet. Im Mischkammergehäuse 105 ist der Kolben 150 axial verschieblich gelagert. Die axiale Verschiebung des Kolbens 150 wird mittels des im Hydraulikzylinder 120 gelagerten Hydraulikkolbens 160 bewirkt. Der Hydraulikkolben 160 ist starr mit der Hydraulikstange 165 gekoppelt, welche an ihrem unteren Ende das erste Kugellager 168 trägt. Am inneren Kranz des Kugellagers 168 ist die Keilwelle 155 gehalten, so dass Hydraulikstange 165 und Keilwelle 155 axial gekoppelt, jedoch bezüglich der Rotation um die Achse A-A entkoppelt sind. Die Keilwelle 155 durchstößt das Kopplungselement 140, wodurch Kopplungselement 140 und Keilwelle 155 in ihrer Rotationsbewegung gekoppelt sind. Am Ende der Keilwelle 155 ist der in der Mischkammer 100 angeordnete Kolben 150 befestigt.

Das oben erwähnte Kopplungselement 140 ist mittels des zweiten Kugellagers 145 mit dem Lagerflansch 110 verbunden, welcher wiederum starr am Mischkammergehäuse 105 angeflanscht ist. Das Kopplungselement 140, welches im wesentlichen symmetrisch bezüglich der Achse A-A aufgebaut ist, trägt an seiner Außenseite den Zahnkranz 142. Der Zahnkranz 142 und somit auch das Kopplungselement 140 ist mit dem Motor 135 antreibbar. Dazu ist auf der Motorachse des Motors 135 das Zahnrad 136 angebracht, welches wiederum mittels des Zahnriemens 137 mit dem Zahnkranz 142 in Verbindung steht. Der Motor 135 ist über die Konsole 130 an der Laterne 115 bzw. am Lagerflansch 110 angeflanscht.

Am Kopplungselement 140 ist der Rührstab 152 angeordnet, welcher sich parallel zur Achse A-A in die Mischkammer 100 erstreckt, wobei er den Kolben 150 durchstößt.

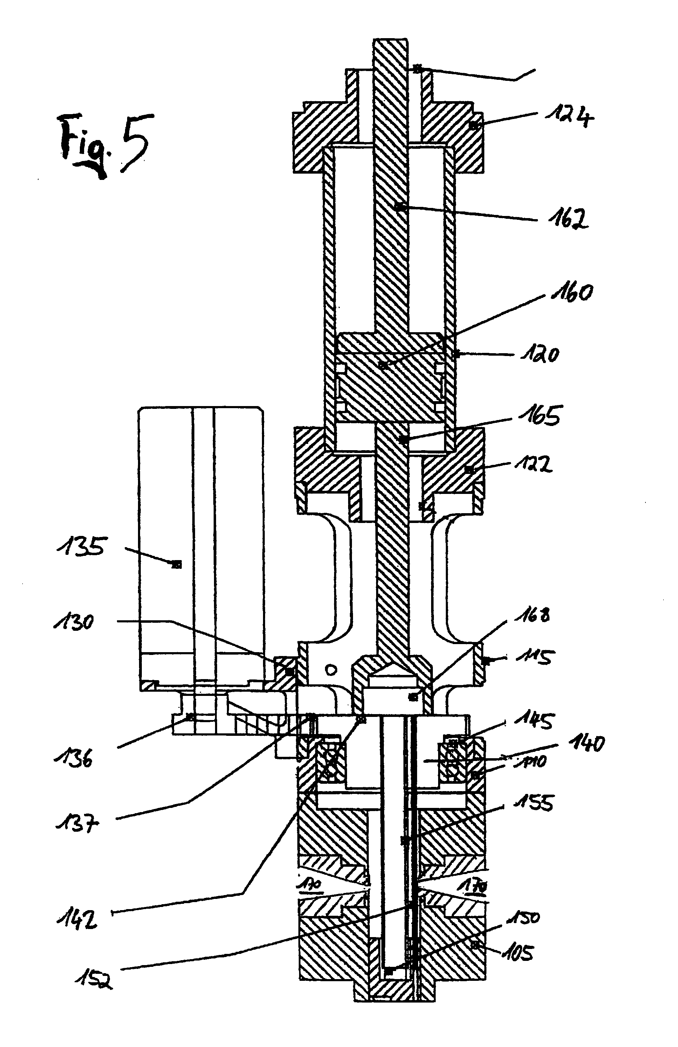

Im Mischkammergehäuse 105 sind die beiden Düsen 170 angeordnet, durch welche die beiden zu mischenden viskosen Flüssigkeiten in die Mischkammer 100 gepresst werden. Die beiden Düsen 170 sind in den Figuren 4 und 5 nur schematisch dargestellt.

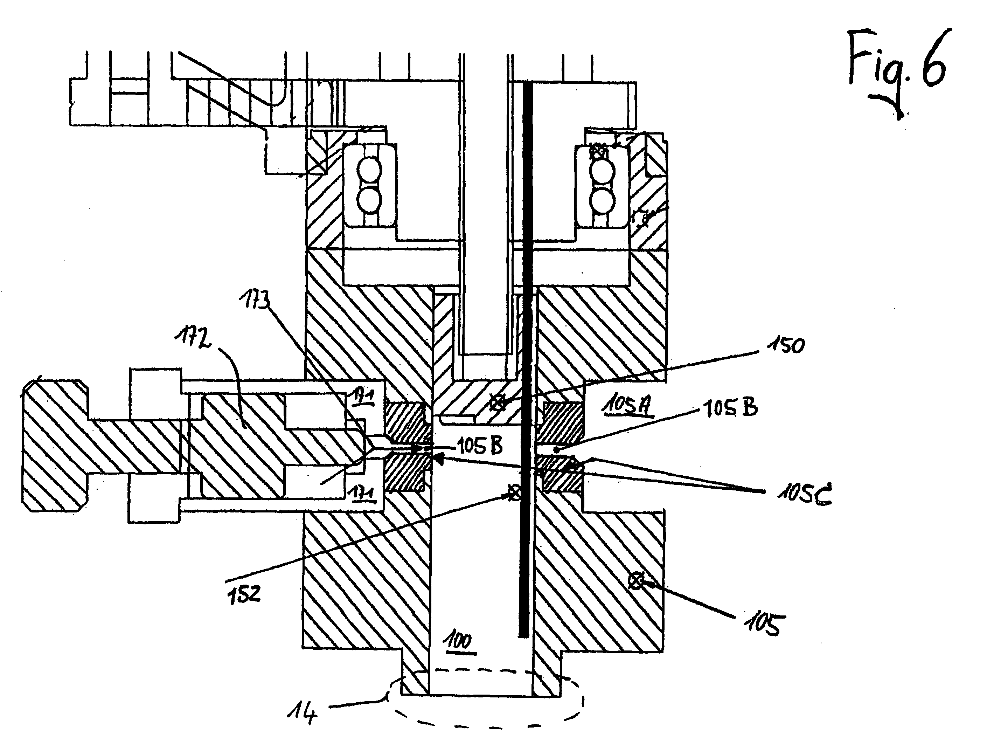

In Fig. 6 ist dargestellt, wie die Düsen 170 aufgebaut sein können. Das Mischkammer-Gehäuse 105 weist zwei Ausnehmungen 105 A auf, in die jeweils ein Düsenkörper 171 eingesetzt ist (dargestellt ist hier jedoch nur ein Düsenkörper 171). Innerhalb des Düsenkörpers 171 wird der Hochdruck, welcher extern aufgebaut wird (s. oben), mittels eines Einspritzkolbens 172 geregelt und die Flüssigkeit durch die Düsenkörperöffnung 173 aus dem Düsenkörper 172 herausgedrückt. Solche Anordnungen sind in der Technik bekannt und sollen hier nicht weiter beschrieben werden. Die eigentlichen Düsenöffnungen sind hier die Austrittsbohrungen 105 B von gehärteten Düsenspitzen 105 C im Mischkammer-Gehäuse 105. Es wäre auch denkbar die Düsenkörper bis an die Mischkammer heranzuführen, so dass die Vorderfront des Düsenkörpers Teil der Seitenwandung der Mischkammer wird. In diesem Fall wären Düsenkörperöffnung und Austrittsbohrung der Düsenspitzen identisch.

Die prinzipielle Arbeitsweise des Mischers wird nun beschrieben:

In Figur 4 ist die erste Arbeitsstellung der Vorrichtung gezeigt. Hierbei befindet sich der Kolben 150 oberhalb der Düsenöffnungen der Düsen 170. In dieser Stellung werden die zu mischenden Flüssigkeiten durch die Düsen 170 in die Mischkammer 100 eingespritzt. Das Einspritzen geschieht normalerweise unter Hochdruck, d.h. mit Einspritzdrücken über 100 bar. Während des Einspritzvorgangs wird das Kopplungselement 140 mittels des Motors 135 und somit auch der Kolben 150 und der Rührstab 152 in Rotation versetzt. Durch die Rotation des Kolbens 150 und des Rührstabs 152 können auch hochviskose Flüssigkeiten miteinander vermischt werden. Die durchmischten Flüssigkeiten treten am unteren Ende der Mischkammer 100 nach außen aus.

Nach Beendigung des Mischvorgangs wird die Zufuhr der beiden Flüssigkeiten durch die Düsen 170 abgestellt, anschließend wird mittels Druckbeaufschlagung des Hydraulikkolbens 160 der Kolben 150 axial in der Mischkammer 100 nach unten geschoben (siehe Figur 5). Dadurch werden die verbliebenen Reste aus der Mischkammer 100 ausgeschoben und somit die Mischkammer 100 gereinigt. Gleichzeitig erfolgt auch ein Abstreifen und somit Säubern des Rührstabes 152. Soll die Produktion nun wieder aufgenommen werden, wird der Kolben 150 wieder in die in Figur 1 gezeigte Position zurückgezogen und der Zyklus kann von neuem beginnen.

Durch die hier beschriebenen Selbstreinigungsfunktion ist sichergestellt, daß die Mischer/Düse-Einheit bei jeder Produktionsunterbrechung, beispielsweise auch zum Einlegen einer Zwischenschicht (s. oben), einfach gereinigt werden kann. Dies ist bei einem schnell aushärtenden PU-Schaum, wie er hier Verwendung finden soll, wichtig.

## Patentansprüche

1. Verfahren zum Modellbau, unter Verwendung einer Modellbaumasse, die schichtenweise mittels eines dreidimensional verfahrbaren Auftragskopfes auf einer Unterlage aufgebracht wird,
**dadurch gekennzeichnet, daß** eine Modellbaumasse verwendet wird, deren Volumen sich unmittelbar vor, während oder nach der Abgabe vom verfahrbaren Auftragskopf vergrößert.

2. Verfahren nach Anspruch 1, **dadurch gekennzeichnet, daß** als Modellbaumasse ein Kunststoff verwendet wird, der sein Volumen unter Lufteinwirkung vergrößert.

3. Verfahren nach Anspruch 2, **dadurch gekennzeichnet, daß** als Modellbaumasse ein Kunststoff verwendet wird, der aus mindestens zwei Komponenten (A, B) besteht, die während und/oder nach ihrer Mischung unmittelbar vor dem Auftragen eine volumenvergrößemde Reaktion miteinander durchführen.

4. Verfahren nach Anspruch 1, **dadurch gekennzeichnet, daß** die Arbeitsbahn des dreidimensional verfahrbaren Auftragskopfs aus einer Umsetzung der Geometriedaten eines vorgegebenen, konkreten oder virtuellen Modellentwurfs in Steuersignale für eine Antriebseinrichtung des Auftragskopfes erzeugt wird.

5. Verfahren nach Anspruch 4, **dadurch gekennzeichnet, daß** als Geometriedaten des Modellentwurfs ein 3D-CAD-Datensatz verwendet wird, der in einen Satz von Steuersigralen umgesetzt wird, die sukzessive von der Antriebseinrichtung und vom Auftragskopf abgearbeitet werden.

6. Verfahren nach Anspruch 5, **dadurch gekennzeichnet, daß** Rauminformationen des entstehenden Modells, insbesondere die jeweils erzeugte Schichtdicke nach Beendigung der Volumenvergrößerung, sensorisch erfasst und in Form von Regelgrößen oder Korrektursignalen mit den Steuersignalen verrechnet werden.

7. Verfahren nach Anspruch 1-6, **dadurch gekennzeichnet, daß** der Auftrag der Modellbaumasse in horizontalen Schichten erfolgt.

8. Verfahren nach Anspruch 4-7, **dadurch gekennzeichnet, daß** die Generierung des Steuersignalsatzes aus dem CAD-Datensatz und ggf. den Korrektursignalen so erfolgt, daß die Auftragsparameter des Auftragskopfes und die Bewegung seiner Antriebseinheit eine im wesentlichen konstante Schichtdicke des Kunststoffs nach Beendigung der Volumenvergrößerung bewirken.

9. Verfahren nach Anspruch 8, **dadurch gekennzeichnet, daß** die Schichtdicke zwischen 1 und 5 cm gewählt ist.

10. Verfahren nach den vorhergehenden Ansprüchen, **gekennzeichnet durch** seinen Einsatz zur Herstellung eines Modells, insbesondere eines Kraftfahrzeugmodells, in der für die Realisierung des Modellentwurfs vorgesehenen Originalgröße (Maßstab 1:1).

11. Verfahren nach Anspruch 1 oder 10, **dadurch gekennzeichnet, daß** der Steuersignalsatz derart aus den 3D-CAD-Daten generiert wird, daß ein Modell mit homogener Dichte entsteht.

12. Verfahren nach Anspruch 1 oder 10, **dadurch gekennzeichnet, daß** der Steuersignalsatz derart aus den 3D-CAD-Daten generiert wird, daß ein Modell mit homogenem Kembereich und mit einem zumindest teilweise umhüllenden Schalenbereich erzeugt wird, dessen Dichte von der Dichte des Kernbereichs abweicht, insbesondere größer gewählt ist.

13. Verfahren nach Anspruch 7, **dadurch gekennzeichnet, daß** das Modell abhängig von der Schichtenstruktur mit Untermaß oder Übermaß hergestellt und in einem nachfolgenden Arbeitsgang, insbesondere Beschichtung, Glättung oder Abtragung endbearbeitet wird.

14. Verfahren nach Anspruch 1, **dadurch gekennzeichnet, daß** der Modellaufbau in mindestens zwei Abschnitten erfolgt, in denen unterschiedliche Modellbaumassen eingesetzt werden.

15. Verfahren nach Anspruch 13 oder 14, **dadurch gekennzeichnet, daß** zur Durchführung der Endbearbeitung oder beim Wechsel der Modellbaumasse der Auftragskopf gegen ein Endbearbeitungswerkzeug oder einen anderen Auftragskopf ausgetauscht wird.

16. Verfahren nach einem der vorangehenden Ansprüche, **dadurch gekennzeichnet, dass** Bleche oder Folien zwischen Schichten der Modellbaumasse eingebracht werden.

17. Vorrichtung zur Durchführung des Verfahrens nach Anspruch 7-15, **gekennzeichnet durch** einen Portalroboter (20) als Antriebseinheit für den Auftragskopf und/oder die Endbearbeitungswerkzeuge.

18. Vorrichtung zur Durchführung des Verfahrens nach Anspruch 1, **dadurch gekennzeichnet, daß** der Auftragskopf eine Düse (12) und einen mit zwei vorzugsweise von Servomotoren angetriebenen Einspritzpumpen (32, 42) verbundenen Mischer (14) aufweist.

## Claims

1. Method of constructing models by using a model-building composition, which is applied in layers to a base by means of a three-dimensionally displaceable application head, **characterised in that** a model-building composition is used, the volume of which increases immediately prior to, during or following the release from the displaceable application head.

2. Method according to claim 1, **characterised in that** a plastics material is used as the model-building composition, which increases its volume under the effect of air

3. Method according to claim 2, **characterised in that** a plastics material is used as the model-building composition, which comprises at least two components (A, B) which react with each other during and/or after they are mixed immediately prior to the application, so as to increase in volume.

4. Method according to claim 1, **characterised in that** the operating path for the three-dimensionally displaceable application head is produced by converting the geometric data of a prescribed, concrete or virtual prototype model into control signals for a driving means of the application head.

5. Method according to claim 4, **characterised in that** a 3D-CAD data set is used as geometric data for the prototype model, which set is converted into a set of control signals, which are processed successively by the driving means and by the application head.

6. Method according to claims 5, **characterised in that** spatial information for the resulting model, more especially the thickness of the respectively created layer after termination of the volume increase, is detected with sensors and is computed with the control signals in the form of regulating variables or correction signals.

7. Method according to claims 1-6, **characterised in that** the model-building composition is applied in horizontal layers.

8. Method according to claims 4-7, **characterised in that** the control signal set is generated from the CAD data set and, if necessary, from the correction signals, such that the application parameters for the application head and the movement of its drive unit result in a substantially constant layer thickness of the plastics material after termination of the volume increase.

9. Method according to claim 8, **characterised in that** the layer thickness is selected to be between 1 and 5 cm.

10. Method according to the preceding claims, **characterised by** its use for producing a model, more especially an automotive vehicle model, in the original size (scale 1:1) which is envisaged for realising the prototype model.

11. Method according to claim 1 or 10, **characterised in that** the control signal set is generated from the 3D-CAD data in such a manner that a model with a homogeneous density is created.

12. Method according to claim 1 or 10, **characterised in that** the control signal set is generated from the 3D-CAD data in such a manner that a model with a homogeneous core region and an at least partially surrounding shell region is created, the density of which deviates from the density of the core region and, more especially, is selected to be greater.

13. Method according to claim 7, **characterised in that** the model is produced in dependence on the layer structure either undersized or oversized and is finished in a subsequent operational step, more especially coating, smoothing or abrading.

14. Method according to claim 1, **characterised in that** the model is constructed in at least two sections, in which different model-building compositions are used.

15. Method according to claim 13 or 14, **characterised in that** the application head is exchanged for a finishing tool or another application head in order to accomplish the finishing operation or for changing the model-building composition.

16. Method according to one of the preceding claims, **characterised in that** sheet metal sheets or foils are inserted between layers of the model-building composition

17. Method for. accomplishing the method according to claims 7-15, **characterised by** an overhead gantry robot (20) as the drive unit for the application head and/or the finishing tools.

18. Apparatus for accomplishing the method according to claim 1, **characterised in that** the application head is provided with a nozzle (12) and a mixer (14), which is connected to two injection pumps (32, 42) preferably driven by servomotors.

## Revendications

1. Procédé pour la fabrication de maquettes en utilisant une masse de fabrication de maquettes qui est appliquée par couches sur un support au moyen d'une tête d'application mobile en trois dimensions, **caractérisé en ce qu'**on utilise une masse de fabrication de maquettes dont le volume augmente directement avant, pendant ou après la distribution par la tête d'application mobile.

2. Procédé suivant la revendication 1, **caractérisé en ce qu'**une matière plastique qui augmente de volume sous l'effet de l'air est utilisée comme masse de fabrication de maquettes.

3. Procédé suivant la revendication 2, **caractérisé en ce qu'**une matière plastique composée d'au moins deux composants (A, B), qui réagissent entre eux avec augmentation de volume pendant et/ou après leur mélange, directement avant l'application, est utilisée comme masse de fabrication de maquettes.

4. Procédé suivant la revendication 1, **caractérisé en ce que** la trajectoire de travail de la tête d'application mobile en trois dimensions est produite à partir d'une conversion des données géométriques d'un projet de maquette prédéfini, concret ou virtuel, en signaux de commande pour un dispositif d'entraînement de la tête d'application.

5. Procédé suivant la revendication 4, **caractérisé en ce qu'**on utilise comme données géométriques du projet de maquette un article de CAO-3D qui est converti en un jeu de signaux de commande qui sont exécutés successivement par le dispositif d'entraînement et par la tête d'application.

6. Procédé suivant la revendication 5, **caractérisé en ce que** des informations spatiales de la maquette créée, en particulier l'épaisseur de couche produite à chaque fois après la fin de l'augmentation de volume, sont saisies par capteur et comptées sous forme de grandeurs de réglage ou de signaux correctifs avec les signaux de commande.

7. Procédé suivant l'une des revendications 1 à 6,
**caractérisé en ce que** l'application de la masse de fabrication de maquettes est assurée en couches horizontales.

8. Procédé suivant l'une des revendications 4 à 7,
**caractérisé en ce que** la génération du jeu de signaux de commande à partir de l'article de CAO et éventuellement des signaux correctifs est assurée de telle sorte que les paramètres d'application de la tête et le déplacement de son unité d'entraînement provoquent une épaisseur de couche essentiellement constante de la matière plastique après la fin de l'augmentation de volume.

9. Procédé suivant la revendication 8, **caractérisé en ce que** l'épaisseur de couche est choisie entre 1 et 5 cm.

10. Procédé suivant les revendications précédentes, **caractérisé par** sa mise en oeuvre pour la fabrication d'une maquette, en particulier d'une maquette de véhicule automobile, dans la taille originale prévue pour la réalisation du projet de maquette (échelle 1 : 1).

11. Procédé suivant l'une des revendications 1 et 10,
**caractérisé en ce que** le jeu de signaux de commande est généré à partir des données de CAO-3D de telle sorte qu'une maquette de masse volumique homogène est créée.

12. Procédé suivant l'une des revendications 1 et 10, **caractérisé en ce que** le jeu de signaux de commande est généré à partir des données de CAO-3D de telle sorte qu'une maquette est produite avec une zone de coeur homogène et une zone de coque au moins partiellement enveloppante, dont la masse volumique diffère de celle de la zone de coeur, en particulier est choisie plus grande.

13. Procédé suivant la revendication 7, **caractérisé en ce que** la maquette est fabriquée, en fonction de la structure de couches, avec un sous-dimensionnement ou un surdimensionnement et finie dans une opération suivante, en particulier enduction, lissage ou enlèvement.

14. Procédé suivant la revendication 1, **caractérisé en ce que** la structure de maquette est réalisée en au moins deux sections dans lesquelles sont utilisées des masses de fabrication de maquettes différentes.

15. Procédé suivant l'une des revendications 13 et 14,
**caractérisé en ce que** la tête d'application est échangée contre un outil de finition ou une autre tête d'application pour la réalisation de la finition ou lors du changement de la masse de fabrication de maquettes.

16. Procédé suivant l'une des revendications précédentes, **caractérisé en ce que** des tôles ou des feuilles sont introduites entre des couches de la masse de fabrication de maquettes.

17. Dispositif pour la mise en oeuvre du procédé suivant l'une des revendications 7 à 15, **caractérisé par** un robot portique (20) en tant qu'unité d'entraînement pour la tête d'application et/ou les outils de finition.

18. Dispositif pour la mise en oeuvre du procédé suivant la revendication 1, **caractérisé en ce que** la tête d'application présente un injecteur (12) et un mélangeur (14) raccordé à deux pompes d'injection (32, 42) entraînées de préférence par des servomoteurs.
